# EUROPEAN PATENT APPLICATION

(11) **EP 2 677 148 A2**
(43) Date of publication of application: **25.12.2013**
(21) Application number: 12183332.1
(22) Date of filing: 06.09.2012
(51) Int. Cl.: F02D 41/00, F02D 41/14, F02D 21/08, F02M 25/07

(54) **Exhaust gas recycling control system of combustion device**

(30) Priority: 22.06.2012 TW 101122334
(71) Applicant: Sheng Zhun Enterprise Co., Ltd., New Taipei City 244 (TW)
(72) Inventor: Liao, Chiu-Huei, New Taipei City 244 (TW)
(74) Representative: Chaillot, Geneviève

(57) **Abstract**

An exhaust gas recycling control system comprising a combustion device (10) having an exhaust end (12) connected with a recycling tube (30) to an inlet end (11), the recycling tube (30) including a control valve (40) to control the recycling tube (30) being in an opened or closed state, an oxygen sensor (50) mounted on the exhaust end (12) or the recycling tube (30) to detect an oxygen content in an exhaust gas being transmitted to a controller (60) for controlling the control valve (40) based thereon, wherein, when the oxygen content of the exhaust gas is higher than a set value, the control valve (40) opens and a high oxygen content (14) of exhaust gas flows through the recycling tube (30) to the inlet end (11).

## Description

### BACKGROUND OF THE INVENTION

### 1. Field of the Invention:

The invention relates to an exhaust gas recycling control system of combustion device, and more particularly to an oxygen content of exhaust gas as a control of the opening or closing the backflow path.

### 2. Description of the Related Art

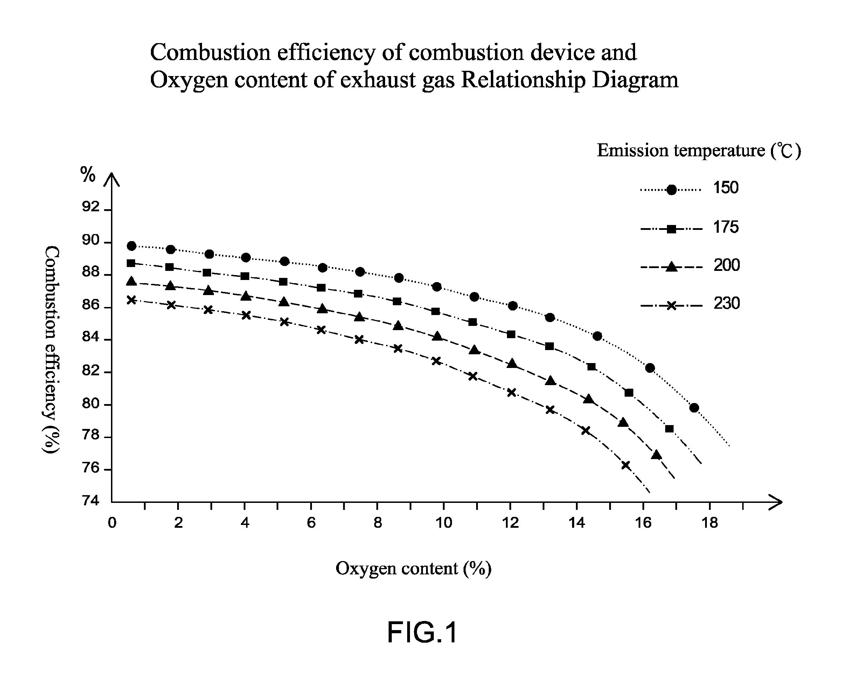

Due to the rising of the oil and electricity prices and the greenhouse effect, energy-saving and carbon reduction have become serious issues in our life and industry, especially in industry. The fuel as an energy source is required for all kinds of boilers, incinerators, power generation device, etc. However, a lot of exhaust gas is inevitably generated during the combustion process of these devices, and is constantly emitted to the atmosphere. A boiler as an example has the following drawbacks:
1. Generally, the emission temperature of a boiler is between 150°C and 208°C. Such a high temperature of exhaust gas emitted to the atmosphere not only causes air pollution but accelerates the global warming effect, which is extremely serious environmental problem.
2. The continuous emission of the exhaust gas of 150 °C to 280 °C causes continuous loss of the temperature of a combustion chamber; such that, the fuel and cold air must be continually add into the device, resulting in increasing costs.
3. The average oxygen content of the above-mentioned exhaust gas is over 9%, even up to 18%. The boiler, for example, FIG. 1 shows the relationship between the combustion efficiency of the conventional combustion device and the oxygen content of the exhaust gas, and the emission temperature respectively is 150°C, 175°C, 200°C, and 230°C. FIG. 1 shows that the higher is the oxygen content O₂%, the lower is the combustion efficiency, resulting in a part of the heat energy of the fuel is taken away by the excess air. Generally, every 3% of the oxygen content in the exhaust gas is decreased; about 1% to 2% of the fuel is saved.

Therefore, if the oxygen content in the exhaust gas is under control, the purpose of energy-saving and carbon-saving can be achieved. Nowadays, the air-fuel ratio control system is used in industry; that is, the early mechanical air-fuel ratio device is replaced by the microcomputer air-fuel ratio control system.

The microcomputer air-fuel ratio control system comprises combustion device program control, air blower speed control, etc., and provides a curve way operation to solve the combustion problems of the mechanical air-fuel ratio device. However, the oxygen content emission of the exhaust gas is still high, and the high-temperature exhaust gas (150 °C to 280 °C) cannot be recycled, which is a kind of waste. Therefore, there is room for improvement.

### SUMMARY OF THE INVENTION

It is a primary object of the present invention to provide an exhaust gas recycling control system of combustion device, which controls an exhaust gas recycling flow according to the oxygen content in the exhaust gas for reusing the high-temperature exhaust gas and thus achieves energy saving and carbon emission reduction effects and reduces the chimney emissions to about 15% to 60%.

In order to achieve the above object, the invention includes: a combustion device having an inlet end and an exhaust end; an air conditioning unit arranged before the inlet end to adjust the supply of cold air; **characterized in that**: the exhaust end is connected with a recycling tube to the inlet end, and the recycling tube includes a control valve thereon to control the recycling tube being in an opened or closed state; an oxygen sensor mounted on the exhaust end or the recycling tube to detect an oxygen content in an exhaust gas and convert an oxygen content detected signal into a voltage signal being sent to a controller ; and the controller has a computer processing capability to receive the signal of the oxygen sensor as a control of the control valve being in the opened or closed state; when the oxygen content in the exhaust gas is higher than a set value of the controller, the control valve opens and a high oxygen content of exhaust gas flows through the recycling tube to the inlet end to be reuse.

The combustion device may include a boiler, an incinerator, and a power generation device, the control valve may include a gate valve, a magnetic valve, and a butterfly valve, wherein the butterfly valve is driven by a servomotor for the controller to control an operation of the servomotor, in order to control the butterfly valve being in the opened or closed state.

Further, the recycling tube further includes a blower controlled by the controller, being turned on or off.

Base on the features disclosed, the present invention provides the recycling tube and the oxygen sensor to detect the oxygen content in an exhaust gas and send the high oxygen content to the inlet end, and thus to greatly reduce the inner temperature within the combustion device and to reduce the injection of the external cold air. Therefore, the present invention achieves energy saving and carbon emission reduction effects and avoid air pollution and global warming.

### BRIEF DESCRIPTION OF THE DRAWINGS

FIG. 1 is relationship diagram, illustrating the relationship between the combustion efficiency of the conventional combustion device and the oxygen content of the exhaust gas;
FIG. 2 is a schematic view of the preferred embodiment in accordance with the present invention;
FIG. 3 is a flow process view of the exhaust gas recycling control of the present invention; and
FIG. 4 is schematic view, illustrating a preferred region of the set value of the oxygen content in accordance with the present invention,

### DETAILED DESCRIPTION OF THE PREFERRED EMBODIMENT

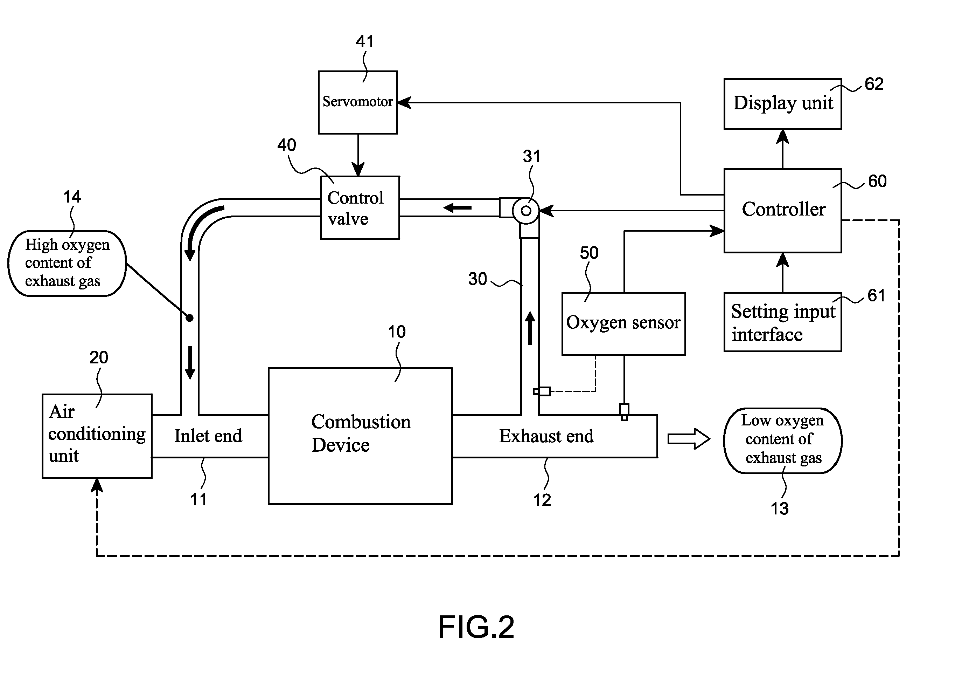

Referring to FIG. 2, the preferred embodiment of an exhaust gas recycling control system of combustion device in accordance with the present invention comprises: a combustion device **10** includes a boiler, an incinerator, and a power generation device...etc., which has a combustion chamber and an exhaust device. The combustion device **10** has an inlet end **11** at a front side thereof and an exhaust end **12** at a reserve side thereof to discharge an exhaust gas of the combustion device **10.** Moreover, an air conditioning unit **20** is arranged in front of the inlet end **11.** For example, the air conditioning unit **20** may be a blower of a burner (not shown) to provide cold air containing about 21% of the oxygen for the combustion device **10.** However, it is a prior art and thus will not be described in details here.

The present invention is **characterized in that** the exhaust end **12** is connected with a recycling tube **30** to the inlet end **11,** and the recycling tube **30** includes at least a control valve **40** thereon to control the recycling tube **30** being in an opened or closed state. In this embodiment, the control valve **40** is a butterfly valve driven by a servomotor **41,** but it is not a limitation; that is, the control valve **40** may be a gate valve or a magnetic valve.

An oxygen sensor **50** is mounted on the exhaust end **12** or the recycling tube **30** to detect the oxygen content **O₂ %** in the exhaust gas and convert an oxygen content detected signal into a voltage signal being sent to a controller **60.**

In this embodiment, the controller **60** has a computer processing capability to receive the signal of the oxygen sensor **50** as a control of the control valve **40** being in the opened or closed state. When the oxygen content **O₂ %** in the exhaust gas is higher than a set value of the controller **60,** the control valve **40** opens and high oxygen content **14** of exhaust gas flows through the recycling tube **30** to the inlet end **11** to be reused.

Further, the controller **60** controls an operation of the servomotor **41** to control the butterfly valve which is the control valve **40,** being in the opened or closed state. The opening of butterfly valve **40** simultaneously changes with the oxygen content of the exhaust gas; that is, when the oxygen content **O₂ %** in the exhaust gas is high, the controller **60** controls the servomotor **41** to increase the opening of the butterfly valve **40** for increasing the exhaust gas recycling flow. On the contrary, when the oxygen content in the exhaust gas is lower than the set value, the butterfly valve **40** is closed so that low oxygen content **13** of exhaust gas is discharged through the exhaust end **12.**

The recycling tube **30** further includes a blower **31** controlled by the controller **60,** being turned on or off; that is, when the oxygen content **O₂ %** in the exhaust gas is high, the controller **60** controls the blower **31** to be turned on. In the preferred embodiment, the blower **31** may be driven by a variable-frequency motor (not shown) to speed up the rotation speed of the blower **31.** On the contrary, when the oxygen content **O₂ %** in the exhaust gas is low, the controller **60** slows down or turns off the blower **31.** The blower **31** in this embodiment can be set in accordance with the type of the combustion device **10;** that is, the blower **31** is not required for some of the combustion devices which could easily guide the exhaust gas through the recycling tube **30** to the inlet end **11.**

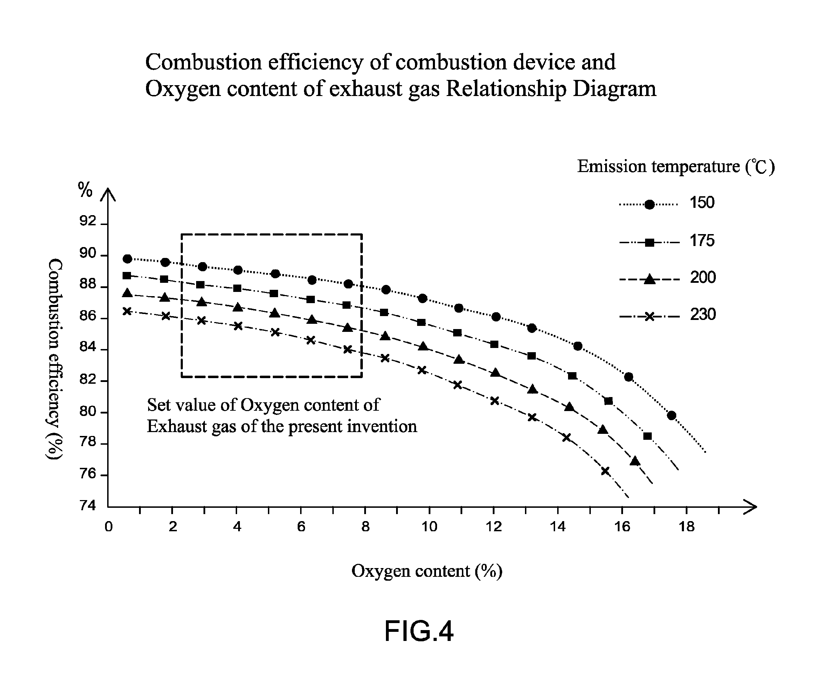

Moreover, the controller **60** further includes a setting input interface **61** and a display unit **62.** The setting input interface **61** is input a set value of an oxygen content **O₂%** into the controller **60** in accordance with the type of the combustion device **10.** For example, when setting the set value of the oxygen content as shown in FIG. 4 higher than 8% or 6%, even higher than 2%, the exhaust gas recycling control system is actuated, and the high oxygen content **14** of exhaust gas of the exhaust end **12** flows through the recycling tube **30** to the inlet end **11** for reusing.

Furthermore, the controller **60** not only controls the opening and closing of the control valve **40** but also adjusts the inlet-air flow of the air conditioning unit **20** according to the oxygen content detected by the oxygen sensor **50** for the air-fuel ratio within the combustion device **10** to achieve the optimization state, and thus to reduce nitrogen oxides and to enhance the combustion efficiency.

FIG. 4 is an example of a boiler, showing that the combustion efficiency is inversely proportional to the oxygen content **O₂%.** When the oxygen content in the exhaust gas reaches to 14% to 18%, the combustion efficiency is between 75% and 80% in accordance with the different emission temperature; when the oxygen content in the exhaust gas lowers to 4% to 8%, the combustion efficiency is between 85% and 90%. Therefore, if the oxygen content in the exhaust gas declines from 15% to 6%, the oxygen content value declines 9%, this can save about 3% to 6% of the fuel.

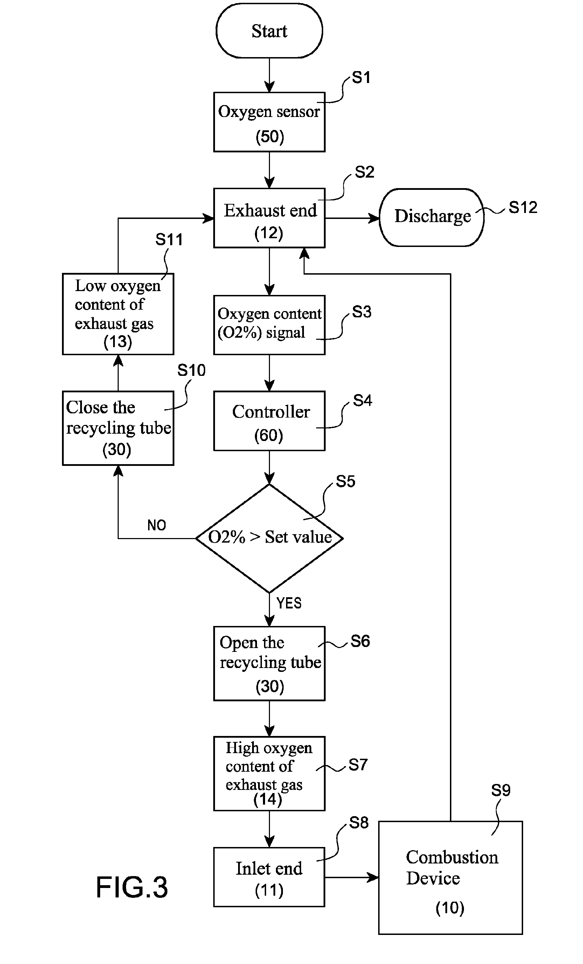

With the reference to FIG. 3, the present invention with above-disclosed technical features has the following flow process of the oxygen content in the control of the exhaust gas recycling flow:
The flow processes S1 to S2 show that the oxygen sensor **50** detects the oxygen content of the exhaust gas in the exhaust end **12.**
The flow processes S3 to S4 show that the oxygen content detected signal is sent to the controller **60.**
The flow process S5 show that the controller **60** judges whether the oxygen content **O₂%** of the exhaust gas is higher than the set value of the controller **60.**
The flow processes S6 to S9 show that when the oxygen content **O₂ %** in the exhaust gas is higher than the set value of the controller **60,** the recycling tube **30** is opened for the high oxygen content **14** of the exhaust gas flowing to the inlet end **11** to be reuse by the combustion device **10.**
The flow processes S10 to S11 show that the oxygen content **O₂ %** in the exhaust gas is lower than the set value of the controller **60;** the recycling tube **30** is closed for the low oxygen content **13** of the exhaust gas being discharged through the exhaust end **12.**

Base on the features disclosed, the present invention provides a combustion device **10** with the exhaust content and the recycling tube **30** for the high oxygen content **14** guided to the inlet end **11;** such that, the inner temperature of the combustion device **10** will not drop too fast, and the air conditioning unit **20** without the injection of the external cold air has energy-saving effect. On the other hand, most of the exhaust gas is recycled for avoiding air pollution and slowing down the global warming.

Therefore, the present invention different from a traditional exhaust gas control method provides the oxygen sensor **50** to detect the oxygen content in the exhaust gas and the controller **60** to control exhaust gas recycling flow in the recycling tube **30** according to the oxygen content in the exhaust gas, which achieves energy-saving and carbon emission reduction effects and enhances the efficacy of a boiler.

Although particular embodiments of the invention have been described in detail for purposes of illustration, various modifications and enhancements may be made without departing from the spirit and scope of the invention. Accordingly, the invention is not to be limited except as by the appended claims.

## Claims

1. An exhaust gas recycling control system of combustion device, comprising:
a combustion device (10) having an inlet end (11) and an exhaust end (12); an air conditioning unit (20) arranged before the inlet end (11) to adjust the supply of cold air;
**characterized in that:**
the exhaust end (12) is connected with a recycling tube (30) to the inlet end (11),
and the recycling tube (30) includes a control valve (40) thereon to control the recycling tube (30) being in an opened or closed state;
an oxygen sensor (50) mounted on the exhaust end (12) or the recycling tube (30) to detect an oxygen content (O₂ %) in an exhaust gas and convert an oxygen content detected signal into a voltage signal being sent to a controller (60); and
the controller (60) has a computer processing capability to receive the signal of the oxygen sensor (50) as a control of the control valve (40) being in the opened or closed state; when the oxygen content (O₂ %) in the exhaust gas is higher than a set value of the controller (60), the control valve (40) opens and a high oxygen content (14) of exhaust gas flows through the recycling tube (30) to the inlet end (11) to be reuse.

2. The exhaust gas recycling control system of combustion device as claimed in claim 1, wherein the combustion device (10) includes a boiler, an incinerator, and a power generation device.

3. The exhaust gas recycling control system of combustion device as claimed in claim 1, wherein the control valve (40) includes a gate valve, a magnetic valve, and a butterfly valve.

4. The exhaust gas recycling control system of combustion device as claimed in claim 3, wherein the butterfly valve is connected to a servomotor (41) for the controller (60) to control an operation of the servomotor (41), in order to control the butterfly valve being in the opened or closed state.

5. The exhaust gas recycling control system of combustion device as claimed in claims 1 to 4, wherein the recycling tube (30) further includes a blower (31) controlled by the controller (60), being turned on or off.

6. The exhaust gas recycling control system of combustion device as claimed in claim 5, wherein the blower (31) is driven by a variable-frequency motor to control a rotation speed of the blower (31).

7. The exhaust gas recycling control system of combustion device as claimed in claim 6, wherein the controller (60) further includes a setting input interface (61) and a display unit (62).
